# EUROPEAN PATENT SPECIFICATION

(11) **EP 1 039 433 B1**
(45) Date of publication and mention of the grant of the patent: **26.03.2008**
(21) Application number: 99850183.7
(22) Date of filing: 29.11.1999
(51) Int. Cl.: G09F 3/20, G09F 7/18, G09F 3/06, H02G 3/14, H01H 9/18

(54) **A marking device**
Markierungsvorrichtung
Dispositif de marquage

(30) Priority: 19.03.1999 SE 9900993
(43) Date of publication of application: 27.09.2000
(73) Proprietor: Schneider Electric Distribution Centre AB, 611 29 Nyköping (SE)
(72) Inventor: Magnusson, Anders, 310 41 Gullbrandstorp (SE)
(74) Representative: Wittrup, Flemming

(56) References cited:
- DE-A- 3 536 005
- DE-A- 4 013 803
- DE-U- 8 504 260
- FR-A- 2 629 256
- GB-A- 2 220 188

## Description

The invention concerns a marking device for an electric apparatus such as an electric switch, an electric terminal etc.

Different types of electric installation apparatus could be found in domestic houses, in offices , in hospitals etc for electric light, for electrically driven tools and for integrated systems for electric supply of machines, for ventilation, for drainage etc. These apparatus are often collected in groups on a wall, close to each other and with no visible connection to the function that is operated by the apparatus. It is of course essential that the individual who is operating the apparatus is perfectly sure of the connection between the apparatus and its function. In a hospital it can be a question of life or death. In addition there are often formal demands that each electric apparatus is correctly marked.

In order to decrease the risks for mistakes and to fulfill the formal demands, it is common to identify the function of the apparatus by help of some sort of marking, either on the apparatus itself or on the wall close to it. Today, engraved plates which are attached to the apparatus by screws or rivets are often used. This solution is expensive and time consuming.

The purpose of the invention is thus to obtain a marking device for the above-mentioned objects which is plain and easy to apply and also to replace if the function of the apparatus should be changed.

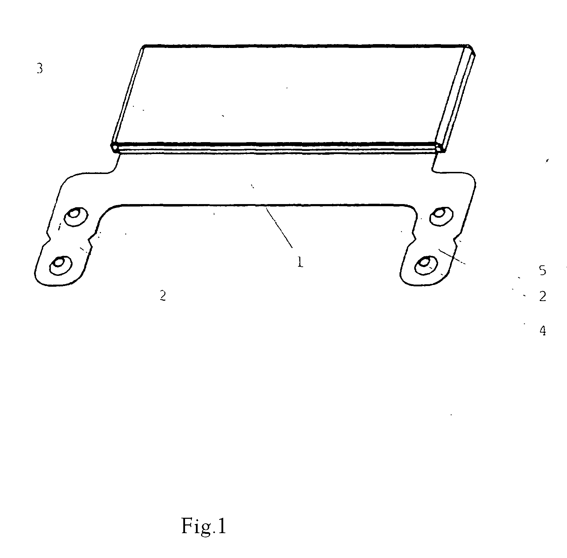

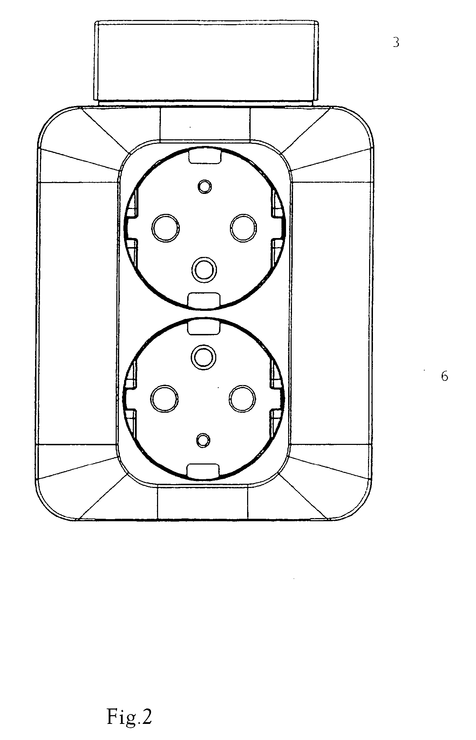

The invention is defined by claim 1, and is disclosed more closely below with reference to the enclosed drawings. Fig 1 shows a view of a marking plate, while Fig 2 shows an installation apparatus provided with a marking plate according to the invention.

In the drawings 1 stands for a yoke and 2 the legs of a fork-shaped marking plate. 3 stands for a surface for marking text, 4 and 5 stand for grooves and fractural impressions respectively on the legs 2, while 6 finally, stands for a schematically drawn installation apparatus.

The marking plate comprises a couple of legs 2 connected by a yoke 1. The legs are manufactured of a very thin sheet of metal or plastic. The distance between the legs corresponds with the standard dimension of the support frame or the bottom plate of an installation apparatus. When the marking plate shall be mounted, the support frame of the apparatus is loosened somewhat from the wall and the legs 2 and may be a part of the yoke 1 are inserted under the frame. After that the frame is again tightened against the wall and the marking plate becomes locked between the frame and the wall. Thanks to the fact that the material of the legs and the yoke is very thin, the position of the apparatus is practically unchanged relative the wall. In order to further secure that the marking plate will not be displaced by an outer force, the legs are provided with impressions 4, the positions of which correspond with the standardized holes in the frame. An apparatus similar to this is disclosed by DE-A1-3536005.

As mentioned before the legs 2 and the yoke 1 are inserted under the the support frame of the apparatus so far, that the part of the yoke 1, where the marking text is placed, will be located immediately outside of the cover of the apparatus when the latter has been mounted. The object of the invention is to adapt the marking plate to apparatuses of different sizes and this is achieved according to the invention in that the legs 2 are provided with fractural impressions 5, which make it easy to brake off ends that are too long.

A transparent protection cap can be snapped over the marking text in order to protect it and for electrical security reasons. This cap is kept in place by the cover of the apparatus being pressed against the wall.

## Claims

1. A marking device for an electric installation apparatus, such as an electric switch or an electric terminal, for identification of the function or the operating field of the apparatus, whereby
the device includes two legs (2) made of a thin sheet material arranged to be inserted under the support frame or bottom of the electric apparatus (6), said legs (2) being provided with locking means (4) for cooperation with holes or grooves, and the legs (2) are connected by a yoke (1) which is arranged to be positioned at least partly immediately outside of one of the sides of the apparatus (6), said part being provided with a space for a marking text or symbol, **characterized in that** the legs (2) are provided with fractural impressions for easy adapting of their lengths.

2. A marking device according to claim 1,
**characterized in that** the locking means (4) has the form of punched impressions in the sheet material.

3. A marking device according o claim 1,
**characterized in that that** part (3) of the yoke (1) which is visible after mounting is arranged to be provided with a protective cap of an insulating transparent material, which after mounting is kept in place by the cover of the apparatus (6).

## Patentansprüche

1. Markierungsgerät für eine Elektroinstallationsvorrichtung, wie z.B. ein elektrischer Schalter oder ein elektrischer Anschluss, zur Kennzeichnung der Funktion oder des Betriebsgebiets der Vorrichtung, wobei
das Gerät zwei Schenkel (2) umfasst, die aus einem dünnen Blech hergestellt sind, die angeordnet sind, um unter dem Halterungsrahmen oder der Unterseite der Elektrovorrichtung (6) eingesetzt zu werden, wobei die Schenkel (2) mit einer Arretiereinrichtung (4) zur Zusammenwirkung mit Löchern oder Nuten versehen sind, und die Schenkel (2) durch einen Bügel (1) verbunden sind, der angeordnet ist, um mindestens teilweise unmittelbar außerhalb von einer von den Seiten der Vorrichtung (6) positioniert zu werden, wobei der Teil mit einem Raum für einen Markierungstext oder ein Symbol versehen ist, **dadurch gekennzeichnet, dass** die Schenkel (2) zur leichten Anpassung ihrer Längen mit Brucheindrückungen versehen sind.

2. Markierungsgerät nach Anspruch 1,
**dadurch gekennzeichnet, dass** die Arretiereinrichtung (4) die Form von gestanzten Eindrückungen im Blech aufweist.

3. Markierungsgerät nach Anspruch 1,
**dadurch gekennzeichnet, dass** der Teil (3) des Bügels (1), der nach einer Montage sichtbar ist, angeordnet ist, um mit einer Schutzkappe eines isolierenden transparenten Materials versehen zu werden, die nach einer Montage durch die Abdeckung der Vorrichtung (6) an ihrem Ort gehalten wird.

## Revendications

1. Dispositif de marquage pour un appareil d'installation électrique, tel qu'un commutateur électrique ou une borne électrique, destiné à identifier la fonction ou le champ opérationnel de l'appareil, le dispositif comportant deux pattes (2) fabriquées à partir d'un matériau en feuille mince agencé pour être inséré sous le cadre de support ou le fond de l'appareil électrique (6), lesdites pattes (2) étant pourvues de moyens de verrouillage (4) destinés à coopérer avec des trous ou des rainures, et les pattes (2) étant connectées par une culasse (1) qui est agencée peur être positionnée au moins en partie immédiatement à l'extérieur d'un des côtés de l'appareil (6), ladite partie étant pourvue d'un espace pour le marquage d'un texte ou d'un symbole, **caractérisé en ce que** les pattes (2) sont pourvues d'impressions de fracture afin d'adapter facilement leur longueur.

2. Dispositif de marquage selon la revendication 1, **caractérisé en ce que** les moyens de verrouillage (4) présentent la forme d'impressions poinçonnées dans le matériau de feuille.

3. Dispositif de marquage selon la revendication 1, **caractérise en ce que** cette partie (3) de la culasse (1) qui est visible après le montage est agencée pour être pourvue d'un capuchon protecteur d'un matériau transparent isolant, qui, après le montage, est maintenu en place par le couvercle de l'appareil (6).
